# EUROPÄISCHE PATENTSCHRIFT

(11) **EP 3 478 606 B1**
(45) Veröffentlichungstag und Bekanntmachung des Hinweises auf die Patenterteilung: **27.07.2022**
(21) Anmeldenummer: 17736625.9
(22) Anmeldetag: 29.06.2017
(51) Int. Cl.: B65G 23/08

(54) **TROMMELMOTOR MIT ALTERNATIVER GETRIEBEAUFNAHME**
DRUM MOTOR WITH ALTERNATIVE TRANSMISSION MOUNT
MOTEUR-TAMBOUR À LOGEMENT DE TRANSMISSION ALTERNATIF

(30) Priorität: 30.06.2016 DE 102016112054
(43) Veröffentlichungstag der Anmeldung: 08.05.2019
(73) Patentinhaber: Interroll Holding AG, 6592 Sant' Antonino (CH)
(72) Erfinder: MANS, Erwin, 6592 Sant Antonino (DE)
(74) Vertreter: Kohlhof, Stephan
(86) Internationale Anmeldenummer: PCT/EP2017/066173
(87) Internationale Veröffentlichungsnummer: WO 2018/002246

(56) Entgegenhaltungen:
- EP-A1- 1 742 333
- WO-A1-83/00954
- DE-B3-102014 018 769
- DE-C- 499 227
- DE-U- 1 842 769
- US-A- 3 892 144
- US-A1- 2003 017 898
- US-A1- 2004 163 934
- US-B1- 6 443 295

## Beschreibung

Die Erfindung betrifft ein Förderrollensystem und ein Verfahren zum Herstellen einer motorbetriebenen Förderrolle.

Motorbetriebene Förderrollen dieser Art werden für verschiedene Zwecke eingesetzt.

Eine zentrale Anwendung solcher motorbetriebenen Förderrollen sind größere und kleinere Logistikeinheiten beziehungsweise Fördervorrichtungen, bei denen solche motorbetriebenen Förderrollen als Elemente von Streckenförderern gemeinsam mit Leerlaufrollen oder angetriebenen Rollen eingesetzt werden, die über Ketten, Riemen oder dergleichen von der motorbetriebenen Förderrolle angetrieben werden, in Rotation versetzt werden. Die Rollen sind hierbei hintereinander angeordnet und bilden eine Förderstrecke. Unter einer motorbetriebenen Förderrolle im Sinne dieser Erfindung ist auch zu verstehen ein sogenannter Trommelmotor, der beispielsweise als Antriebselement für Bandförderer dient und zu diesem Zweck eine höhere Leistungsklasse, gegebenenfalls eine Innenkühlung durch eine Flüssigkeit und eine höhere Belastungsstufe des Getriebes aufweist als motorbetriebene Förderrollen für Rollenförderstrecken.

Motorbetriebene Förderrollen sind Produkte, die verschiedenen hohen Anforderungen unterliegen. Gefordert ist eine hohe Laufruhe, um den Geräuschpegel in Fördervorrichtungen, die typischerweise mehrere solcher motorbetriebenen Förderrollen aufweisen, gering zu halten. Gefordert ist weiterhin ein kostengünstiges Fertigungsverfahren, denn es handelt sich um Produkte, die in hoher Stückzahl eingesetzt werden. Gefordert ist weiterhin, dass motorbetriebene Förderrollen in unterschiedlichen Varianten verfügbar sind. So werden für verschiedene Anwendungen auch motorbetriebene Förderrollen mit verschiedenen Längen des Förderrollenrohres benötigt, um an jeweils spezifische Produktabmessungen oder Förderkapazitäten angepasst zu sein. Weiterhin werden an motorbetriebene Förderrollen unterschiedliche Anforderungen hinsichtlich der Drehzahl beziehungsweise Fördergeschwindigkeit und hinsichtlich des Drehmoments gestellt.

Aus DE 20 2009 012 821 U1 ist eine motorbetriebene Förderrolle vorbekannt, bei der eine Antriebseinheit innerhalb eines Förderrollenrohrs angeordnet ist und mit einem Getriebe innerhalb des Förderrollenrohrs gekoppelt ist. Der Antrieb des Förderrollenrohrs erfolgt durch Kopplung des Getriebes an eine drehmomentfest mit dem Förderrollenrohr gekoppelte endseitige Kappe, in der eine Achse gelagert ist, die aus dem Förderrollenrohr heraussteht.

Aus DE 69306884 T2 ist eine Antriebsrollenanordnung für einen Gürteltypförderer vorbekannt, bei der ebenfalls innerhalb eines Trommelkörpers eine Antriebseinrichtung und ein Getriebe angeordnet ist.

Aus DE 35 38 173 C1, US 2015/0068874 A1, US 6124656 und US 5442248 sind ebenfalls Antriebsvorrichtungen vorbekannt bei denen innerhalb eines zylindrischen Trommelkörpers eine Antriebseinheit und ein Getriebe angeordnet sind und der Trommelkörper durch diese Antriebseinheit in Rotation versetzt wird.

Aus DE 18 42 769 U ist eine Transporttrommel zum Antrieb von Förderbändern bzw. von Seil- oder Kettentrieben bekannt, welche die Merkmale der Oberbegriffe der Ansprüche 1 und 11 offenbart und bei welcher der Antriebsmotor und das Untersetzungsgetriebe in der geschlossenen Trommel untergebracht sind.

Es ist grundsätzlich bekannt, zu diesem Zweck motorbetriebene Förderrollen unterschiedlicher Bauart herzustellen und anzubieten. Hierbei werden die Komponenten der jeweiligen individuellen motorbetriebenen Förderrolle sorgfältig aufeinander abgestimmt und erfüllen insgesamt die gestellten Anforderungen, indem Elektromotor und Getriebebeispielsweise an die in der Fördervorrichtung benötigten Geschwindigkeit und Drehmoment angepasst werden oder indem ein Elektromotor hinsichtlich seiner Leistung an die Förderrollenrohrlänge angepasst wird. Grundsätzlich ist das so erzielte Ergebnis eine technisch ausgewogene motorbetriebene Förderrolle, die hinsichtlich ihrer Komponenten zueinander passend abgestimmt ist und eine gewünschte hohe Lebensdauer zuverlässig erreicht.

Motorbetriebene Förderrollen werden mit unterschiedlichen Leistungen und Leistungscharakteristiken hergestellt. Insbesondere für Trommelmotoren, jedoch auch für kleinere motorbetriebene Förderrollen, ist es wünschenswert, Ausführungsformen mit hohen Drehzahlen und Ausführungsformen mit hohen Drehmomenten bereitstellen zu können. Diese Forderung wirkt sich auf den gesamten Antriebsstrang der Förderrolle aus. So ist neben dem Antriebsmotor insbesondere das Getriebe und die drehmomentübertragenden Bauteile hohen, jedoch unterschiedlichen Arten von Belastungen ausgesetzt, wenn eine motorbetriebene Förderrolle einerseits mit einer besonders hohen Drehzahl ausgelegt wird oder wenn eine motorbetriebene Förderrolle andererseits mit einem besonders hohen Drehmoment ausgelegt wird.

Um motorbetriebene Förderrollen mit solchen Eigenschaften bereitzustellen, werden unterschiedliche Arten von Getrieben eingesetzt. Häufig kommen Planetengetriebe zum Einsatz, die insbesondere dann, wenn ein hohes Drehmoment am Förderrollenrohr angestrebt wird, mehrstufig ausgeführt sind und so eine sehr hohe Untersetzung erreichen. Im Ergebnis wirken am Getriebeausgang und in den drehmomentübertragenden Bauteilen der Förderrolle vom Getriebeausgang bis zum Förderrollenrohr sehr hohe Drehmomente bei zugleich niedriger Drehzahl.

In anderen Anwendungen kommen Getriebe mit einer nur geringen Untersetzung zum Einsatz, teilweise auch als direkter Achsdurchtrieb ausgeführte Getriebe mit einem Direktantrieb vom Antriebsmotor auf das Förderrollenrohr. Bei diesen Bauarten können sehr hohe Drehzahlen des Förderrollenrohres und der rotationsübertragenden Bauteile der Förderrolle auftreten.

Das Getriebe einer motorbetriebenen Förderrolle und die drehmomentübertragenden Bauteile unterliegen verschiedenen - teilweise einander entgegenstehenden - Anforderungen. Zum einen trägt das Getriebe einen großen Anteil der von einer Förderrolle erzeugten Laufgeräusche bei. Mit dem Ziel, diese Laufgeräusche zu minimieren, werden Getriebe eingesetzt, die zu großen Teilen aus Kunststoff bestehen, beispielsweise ein Kunststoffgehäuse aufweisen und Kunststoffzahnräder. Diese Bauweise ist jedoch insbesondere dann, wenn sehr hohe Drehmomente übertragen werden, nicht ausreichend belastbar, sodass sich für Förderrollen, die für ein hohes Drehmoment konzipiert sind, aus metallischen Werkstoffen hergestellte Getriebe bewährt haben.

Die Integration dieser unterschiedlichen Getriebetypen mit unterschiedlichen Ausgangsdrehmomenten und Ausgangsdrehzahlen in eine Förderrolle erfordert eine Anpassung an die auftretenden Belastungen. Ein hierbei auftretendes Problem liegt darin, dass diese Anpassung fertigungstechnisch aufwendig ist und es gerade dann, wenn Getriebe aus den Randbereichen des Auslegungsspektrums, also mit einer entweder sehr hohen Drehzahl am Getriebeausgang oder einem sehr hohen Drehmoment am Getriebeausgang, eingesetzt werden, keine zufriedenstellende Übertragung des Drehmoments vom Getriebeausgang auf das Förderrollenrohr erzielt wird.

Der Erfindung liegt die Aufgabe zugrunde, ein Förderrollensystem bereitzustellen, bei dem die Integration von Getrieben unterschiedlicher Bauart innerhalb der Förderrolle in besserer Weise möglich ist als im Stand der Technik.

Erfindungsgemäß wird diese Aufgabe durch ein Förderrollensystem nach Anspruch 1 gelöst.

Die erfindungsgemäße Förderrolle weist eine Endkappe auf, die in das Förderrollenrohr eingesetzt ist und die eine verbesserte Funktionalität aufweist. Die Endkappe ist vorzugsweise drehmomentfest mit dem Förderrollenrohr verbunden. Die Endkappe verfügt erfindungsgemäß über einen ersten und einen zweiten Getriebeanschlussabschnitt. Diese beiden Getriebeanschlussabschnitte sind weder integral ausgeführt noch baugleich, sondern sind einerseits voneinander beabstandet und darüber hinaus voneinander verschieden. Die Verschiedenheit der beiden Getriebeanschlussabschnitte der Endkappe kann in einer unterschiedlichen Dimensionierung liegen, kann aber insbesondere auch in einer unterschiedlichen Funktionsweise liegen. So kann beispielsweise einer der beiden Getriebeanschlussabschnitte für eine Verbindung mit dem Getriebeausgang mittels Kraft- bzw. Reibschluss ausgeführt sein, der andere Getriebeanschlussabschnitt kann zur Verbindung mit einem Getriebeausgang mittels Stoffschluss oder Formschluss ausgelegt sein. Durch die Erfindung wird es möglich, Getriebe unterschiedlicher Bauart individuell in die Förderrolle zu integrieren und hierbei mit entweder dem ersten oder dem zweiten Getriebeanschlussabschnitt der Endkappe zu verbinden und hierdurch mit dem Förderrollenrohr zu koppeln.

Grundsätzlich ist zu verstehen, dass sich die Erfindung in der Bereitstellung des ersten und des zweiten Getriebeanschlussabschnitts darstellt. Durch diese Bereitstellung von zwei Getriebeanschlussabschnitten wird es möglich, ein erstes Getriebe oder ein zweites Getriebe in der Förderrolle zu montieren und mit der Endkappe zu verbinden. Dabei wird erfindungsgemäß das erste Getriebe mit dem ersten Getriebeanschlussabschnitt verbunden. Sofern an Stelle des ersten Getriebes ein zweites Getriebe anderer Auslegung oder Bauart eingesetzt wird, wird dieses zweite Getriebe mit dem zweiten Getriebeanschlussabschnitt verbunden. Für beide Getriebe kann daher eine auf die Bauart, die Abmessung oder das Material abgestimmte Anschlussweise an die Endkappe erreicht werden.

In bestimmten Anwendungen kann auch ein Getriebe an den ersten und den zweiten Getriebeanschlussabschnitt angeschlossen werden. Dies kann für die Übertragung besonders hoher Drehmomente oder zur Erzielung einer besonders exakten koaxialen Positionierung des Getriebeausgangs zum Förderrollenrohr vorteilhaft sein. Diese Bauart, die zusätzlichen Montageaufwand aufgrund der damit einhergehenden doppelten und typischerweise zeitgleich auszuführenden Montage des Getriebes an die beiden Getriebeanschlussabschnitte ist solchen besonderen Anwendungen vorbehalten, grundsätzlich ist zu verstehen, dass die Erfindung bevorzugt je nach Getriebe alternativ den ersten oder den zweiten Getriebeanschlussabschnitt zur Übertragung des Drehmoments verwendet.

Gemäß einer ersten bevorzugten Ausführungsform stellt der erste Getriebeanschlussabschnitt eine kraftschlüssige, drehmomentfeste Verbindung zu dem ersten Getriebe bereit. Bei dieser Ausführungsform wird mittels Kraftschluss, also durch Übertragung von Reibkräften, das Drehmoment von dem Getriebeausgang auf den Getriebeanschlussabschnitt und damit die Endkappe übertragen. Ein solcher Kraftschluss kann durch eine Klemmverbindung erreicht werden, dies kann insbesondere durch die Bereitstellung einer Presspassung zwischen dem ersten Getriebeanschlussabschnitt und dem Getriebeausgang bewirkt werden.

Als Getriebeausgang ist im Sinne der Erfindung eine Getriebekomponente zu verstehen, die drehmomentübertragend wirkt. Eine Getriebe ist grundsätzlich so zu verstehen, dass eine Drehmomentabstützung des Getriebes einerseits, ein Drehmomenteingang am Getriebeeingang und ein Drehmomentabgang an dem Getriebeausgang vorgesehen ist. Dies kann je nach Getriebeart unterschiedlich ausgeführt sein, so ist beispielsweise bei einem Planetengetriebe als Getriebeausgang sowohl das Sonnenrad als auch ein Planetenradträger oder das Hohlrad einsetzbar, jede dieser drei Komponenten kann zur Getriebabstützung selbst verwendet werden und jede dieser drei Komponenten kann als Getriebeingang eingesetzt sein. Der erfindungsgemäße Getriebeanschlussabschnitt kann also entsprechend zur Drehmomentabstützung am Getriebeeingang, am Getriebeausgang und zur Drehmomentabstützung des Getriebes selbst eingesetzt werden. Ebenfalls umfasst ist eine Ausgestaltung, bei welcher der erste oder der zweite Getriebeanschlussabschnitt bereits ein Getriebebauteil selbst, beispielsweise das Hohlrad darstellt. In diesem Fall wirkt der Getriebanschlussabschnitt mit den Getriebebauteilen des Getriebes zum Erzeugen des gewünschten Unter- oder Übersetzungsverhältnisses zusammen und die Drehmomentabstützung wirkt zwischen dem einstückig an der Endkappe ausgebildeten Getriebebauteil einerseits und den damit in Eingriff stehenden Bauteilen des Getriebes andererseits.

Die kraftschlüssige Verbindung zwischen Getriebe und Getriebeanschlussabschnitt eignet sich insbesondere zur Übertragung hoher Drehmomente und bei Einsatz von Getrieben, die aus metallischen Werkstoffen hergestellt sind. Weiterhin ist eine kraftschlüssige Verbindung zwischen Getriebe und Getriebeanschlussabschnitt besonders gut geeignet für Förderrollen, die eine hohe Drehpositionsgenauigkeit erfordern. Nach Erkenntnis der Erfinder liegt ein Problem im Stand der Technik darin, dass Getriebe, die zumindest teilweise aus Kunststoff hergestellt sind, den Beanspruchungen, die bei einer solchen Presspassung auftreten, langfristig nicht ausreichend gewachsen sind. Um über eine kraftschlüssige Verbindung ein ausreichend hohes Drehmoment zu übertragen, muss eine hohe Pressung über die gesamte Lebensdauer in der Verbindung aufrechterhalten werden. Kunststoffe neigen dazu, unter einer solchen hohen Pressung ein viskoses oder viskoelastisches Verhalten zu zeigen und können daher über die Lebensdauer Verformung die Höhe der Pressung in der kraftschlüssigen Verbindung reduzieren. Dieser Effekt wird zudem verstärkt, wenn hohe Temperaturen auftreten, was bei hoher Beanspruchung von Förderrollen in deren Innenraum durchaus vorkommen kann.

Gemäß einer weiteren bevorzugten Ausführungsform ist vorgesehen, dass der zweite Getriebeanschlussabschnitt eine nicht kraftschlüssige, drehmomentfeste Verbindung zu einem zweiten Getriebe bereitstellt, das von dem ersten Getriebe verschieden ist und an Stelle des ersten Getriebes in dem Förderrollenrohr montierbar ist. Gemäß dieser Ausführungsform wird durch den zweiten Getriebeanschlussabschnitt eine nicht kraftschlüssige Verbindungsmöglichkeit bereitgestellt. Diese Ausgestaltung ist insbesondere vorteilhaft, um Getriebe mit einer Bauart, die sich für eine kraftschlüssige Verbindung nicht gut eignen, wie beispielsweise Getriebe, die zumindest teilweise aus Kunststoffteilen hergestellt sind, zuverlässig in die Förderrolle integrieren zu können. Durch die Anbindung in anderer Weise als durch Kraftschluss, insbesondere also durch Stoffschluss oder Formschluss, kann für Getriebe solcher anderer Bauart eine günstige Anbindung erreicht werden. So eignen sich Getriebekomponenten aus Kunststoff insbesondere gut für eine Drehmomentübertragung mittels Formschluss, beispielsweise indem eine entsprechende Verzahnung oder ein sonstiges Ineinandergreifen von Materialabschnitten des Getriebes einerseits und der Endkappe andererseits im Bereich des zweiten Getriebeanschlussabschnitts verwirklicht wird. Ferner erlaubt eine Drehmomentenübertragung mittels Formschluss einen Toleranzausgleich oder eine Positionsänderung unter Last zwischen Getriebe und Getriebeanschlussabschnitt. Ebenfalls eignen sich solche Getriebe mit Kunststoffkomponenten gut für eine Verklebung, sofern eine lösbare Verbindung zwischen dem Getriebe und der Endkappe nicht erforderlich ist.

Dabei kann insbesondere vorgesehen sein, dass der zweite Getriebeanschlussabschnitt eine formschlüssige, drehmomentfeste Verbindung zu dem zweiten Getriebe bereitstellt. Neben der kraftschlüssigen Verbindungsweise hat sich nach Erkenntnis der Erfinder insbesondere die formschlüssige Verbindungsweise als Alternative für bestimmte Getriebetypen als besonders gut geeignet erwiesen. Unter einem Formschluss ist hierbei ein direktes Aufeinanderliegen von drehmomentübertragenden Flächen zu verstehen, die solcherart ausgerichtet sind, dass durch eine Übertragung von Druckkräften das Drehmoment übertragen wird. Entgegen der Übertragung durch Kraftschluss, der durch Pressung hervorgerufene Reibkräfte und damit parallel zur übertragenden Oberfläche verlaufende Scherkräfte zur Drehmomentübertragung einsetzt, wird bei einer formschlüssigen Übertragung das Drehmoment durch eine Kraft übertragen, die senkrecht zur kraftübertragenden Fläche liegt oder zumindest eine senkrecht zur kraftübertragenden Fläche liegende Komponente hat, ohne dass es hierbei auf eine Reibwirkung zwischen den kraftübertragenden Flächen ankommt. Die formschlüssige Kraftübertragung ist unempfindlicher gegenüber dem Kriechverhalten von Kunststoffen und eignet sich daher besser zur Übertragung hoher Drehmomente, wenn Getriebe mit Bauteilen aus Kunststoff zum Einsatz kommen.

Überraschend hat sich darüber hinaus gezeigt, dass die Herstellung einer Schnittstelle, die sich zur Drehmomentübertragung mittels Formschluss eignet, in der Fertigung von Kunststoffteilen besonders gut geeignet ist, wohingegen die Herstellung einer Schnittstelle, die sich zur Drehmomentübertragung mittels Kraftschluss eignet, in der Herstellung von metallischen Komponenten besonders gut geeignet ist. So kann beispielsweise eine Verrippung, Verzahnung, Vorsprünge oder Vertiefungen, die für den Formschluss dienen, besonders einfach durch eine urformende Herstellung wie beispielsweise einen Spritzguss erzeugt werden. Demgegenüber kann eine Innen- oder Außenumfangsfläche mit einer Toleranz für eine Presspassung, die als kraftschlussübertragende Fläche dient, besonders gut durch ein spanendes Herstellungsverfahren hergestellt werden.

Gemäß einer weiteren bevorzugten Ausführungsform ist vorgesehen, dass bei Verbindung des ersten Getriebes mit dem ersten Getriebeanschlussabschnitt der zweite Getriebeanschlussabschnitt nicht zur Drehmomentübertragung mit dem ersten Getriebe zusammenwirkt. Wie zuvor erläutert, ist es bei der erfindungsgemäßen Förderrolle besonders bevorzugt, wenn der zweite Getriebeanschlussabschnitt nicht funktionell zur Drehmomentübertragung dient, wenn der erste Getriebeanschlussabschnitt zur Drehmomentübertragung mit dem ersten Getriebe zusammenwirkt, der Getriebeausgang also an den ersten Getriebeanschlussabschnitt angeschlossen ist. Umgekehrt ist es bevorzugt, dass der erste Getriebeanschlussabschnitt keine Funktion zur Drehmomentübertragung verwirklicht, wenn ein zweites Getriebe alternativ zum ersten Getriebe mit dem Getriebeausgang an den zweiten Getriebeanschlussabschnitt angeschlossen ist und das Drehmoment solcherart übertragen wird. Grundsätzlich kann der nicht zur Drehmomentübertragung eingesetzte Getriebeanschlussabschnitt erfindungsgemäß in bestimmten Anwendungen dazu eingesetzt werden, eine Zentrierung der Getriebeausgangswelle zur Endkappe und damit zum Förderrollenrohr bereitzustellen und hierdurch funktional eingebunden werden. Es ist jedoch insbesondere bevorzugt, wenn der jeweils nicht zur Drehmomentübertragung eingesetzte Getriebeanschlussabschnitt weder eine drehmomentübertragende noch eine zentrierende oder eine sonstige Funktion übernimmt, sodass die Montage einerseits vereinfacht wird und andererseits die Gestaltung des Getriebeausgangs alleinig auf einen der beiden Getriebeanschlussabschnitte abgestimmt werden muss, womit Fertigungskosten eingespart werden können.

Noch weiter ist es bevorzugt, dass der erste Getriebeanschlussabschnitt durch eine zylindrische Umfangsfläche gebildet wird, die mit einer zylindrischen Umfangsfläche des ersten Getriebes eine Presspassung bildet und/oder der zweite Getriebeanschlussabschnitt eine axiale Fläche oder eine Umfangsfläche mit mindestens einem Vorsprung oder einer Vertiefung aufweist. Gemäß dieser Ausführungsform wird der erste Getriebeanschlussabschnitt durch eine Außenumfangsfläche oder eine Innenumfangsfläche gebildet, die mit einer entsprechenden Innenumfangsfläche bzw. Außenumfangsfläche des Getriebeausgangs zusammenwirkt und zu einer Presspassung gefügt werden kann. Wie zuvor erläutert, eignet sich diese Verbindungsweise insbesondere für Komponenten aus metallischen Werkstoffen. Dabei ist zu verstehen, dass insbesondere auf der Getriebeausgangsseite ein metallischer Werkstoff zur Ausbildung der Umfangsfläche bevorzugt ist. Erfindungsgemäß kann die Endkappe und damit der erste Getriebeanschlussabschnitt aus Kunststoff hergestellt sein. Die erste Endkappe kann typischerweise solcherart in das Förderrollenrohr eingesetzt sein, dass eine Kapselung und Stützung der Endkappe durch das Förderrollenrohr erzielt wird. Durch diese Kapselung und Stützung wird ein Verformen der Endkappe durch die viskosen oder viskoelastischen Eigenschaften des Kunststoffs weitestgehend verhindert, sodass eine Presspassung, die zur kraftschlüssigen Drehmomentübertragung mittels einer solchen Endkappe aus Kunststoff verwirklicht ist, über den gesamten Betriebszeitraum einer Förderrolle zuverlässig hohe Drehmomente übertragen kann. Unter einer Presspassung ist hierbei eine Verbindung einer Innenumfangsfläche und einer Außenumfangsfläche zu verstehen, bei der die Innenumfangsfläche einen kleineren Durchmesser aufweist als die Außenumfangsfläche.

Erfindungsgemäß ist bei dieser Ausführungsform der zweite Getriebeanschlussabschnitt durch eine axiale Fläche oder durch eine Umfangsfläche gebildet, die mindestens einen Vorsprung oder eine Vertiefung aufweist. Durch eine solche Ausgestaltung kann eine entsprechende Vertiefung oder ein entsprechender Vorsprung am Getriebeausgang mit dem Vorsprung bzw. der Vertiefung des zweiten Getriebeanschlussabschnitts zusammenwirken und eine zuverlässige formschlüssige Verbindung und Drehmomentübertragung erzielen. Die Zusammenwirkung kann dabei nach Art einer Außenverzahnung ausgeführt sein, ebenfalls kann eine stirnseitige Verzahnung zur Drehmomentübertragung eingesetzt werden.

Eine weitere bevorzugte Ausführungsform der erfindungsgemäßen Förderrolle zeichnet sich aus durch eine zweite Achseinheit, die in ein dem ersten Ende gegenüberliegendes zweites Ende des Förderrollenrohres eingesetzt ist, und eine zweite Lagerungseinheit am zweiten Ende des Förderrollenrohres, die in einer zweiten Endkappe befestigt ist, die identisch mit der ersten Endkappe ausgeführt und spiegelsymmetrisch in Bezug auf eine mittige Querschnittsfläche des Förderrollenrohres zur ersten Endkappe im Förderrollenrohr befestigt ist. Gemäß dieser Ausführungsform ist auch am zweiten Ende des Förderrollenrohres eine Endkappe eingesetzt, die baugleich zur ersten Endkappe ist. Durch die baugleiche Ausführung von erster und zweiter Endkappe wird einerseits einem Montagefehler der motorbetriebenen Förderrolle vorgebeugt, andererseits die Ersatzteilhaltung reduziert und die Kosten durch eine Verdopplung der Produktionsstückzahl gegenüber ansonsten individuell eingesetzten Endkappen an dem ersten und zweiten Ende reduziert werden. Besonders bevorzugt ist es, wenn auch die am zweiten Ende eingesetzte zweite Endkappe einen der beiden Getriebeanschlussabschnitte funktionell einsetzt, um hierdurch beispielsweise eine Zentrierung zu bewirken oder eine Drehmomentabstützung des Elektromotors oder einer anderen funktionellen Einheit, wie beispielsweise eines Sensors oder einer Bremsenergiewandlungseinheit.

Noch weiter ist es bevorzugt, die Förderrolle fortzubilden durch ein erstes Dichtungselement, das eine Abdichtung zwischen der ersten Achseinheit und der ersten Endkappe bewirkt und das in der ersten Endkappe befestigt ist. Ein solches Dichtungselement, das an der ersten Endkappe und ebenso auch an der zweiten Endkappe angeordnet sein kann, ist insbesondere als Radialwellendichtring ausgeführt, der eine Abdichtung zwischen rotierenden Bauteilen bewirkt und damit einerseits den Austritt von Schmier- oder Kühlflüssigkeiten aus dem Innenraum der Förderrolle in die Umgebung verhindern kann, andererseits den Zutritt von Flüssigkeiten aus der Umgebung in den Innenraum der Förderrolle verhindern kann.

Noch weiter ist es bevorzugt, dass das erste Getriebe einen Motoranschlussflansch aufweist und mittels des Motoranschlussflansches mit einem in dem Förderrollenrohr angeordneten Motor gekoppelt ist. Gemäß dieser Ausführungsform wird das Getriebe mittels eines Motoranschlussflansches an einen Antriebsmotor gekoppelt, der im Innenraum des Förderrollenrohres angeordnet ist. Insbesondere kann dies ein Elektromotor sein.

Ein Aspekt der Erfindung ist ein Förderrollensystem mit einer Förderrolle der zuvor beschriebenen Bauart, das sich durch ein zweites Getriebe, das einen Anschlussbereich aufweist, der mit dem zweiten Getriebeanschlussabschnitt eine drehmomentfeste Verbindung, insbesondere eine mittels Formschluss drehmomentfeste Verbindung, ausbildet. Gemäß diesem Aspekt der Erfindung wird ein modulartig aufgebautes System für Förderrollen bereitgestellt. In diesem System sind zumindest zwei, vorzugsweise mehrere unterschiedliche Getriebe, vorhanden, und eines dieser Getriebe kann für eine Förderrolle ausgewählt werden. Das ausgewählte Getriebe kann dann entweder eine Drehmomentübertragung über den ersten Getriebeanschlussabschnitt der Endkappe aufweisen, in diesem Fall entspricht das ausgewählte Getriebe dem zuvor beschriebenen ersten Getriebe. Das ausgewählte Getriebe kann jedoch auch von anderer Bauart sein und eine Drehmomentübertragung über den zweiten Getriebeanschlussabschnitt bewirken, dies entspricht dann einem zweiten Getriebe anderer Bauart als das erste Getriebe. Das so ausgebildete Förderrollensystem weist eine hohe Variabilität im Bereich der Getriebeauswahl auf und verwirklicht diese hohe Variabilität, ohne dass hierfür drehmomentübertragende Komponenten der Förderrolle zwischen Getriebeausgang und Förderrollenrohr in entsprechender unterschiedlicher Vielzahl zur Anpassung an die Getriebe bereitgehalten werden müssen. Stattdessen kann in dem erfindungsgemäßen Förderrollensystem eine an die Bauart und insbesondere an das Material oder die Ausgangsdrehmomente und -drehzahlen des Getriebes angepasste Verbindung vom Getriebeausgang an die Endkappe bereitgestellt werden.

Das erfindungsgemäße Förderrollensystem kann fortgebildet werden, indem der zweite Getriebeanschlussabschnitt eine axiale Fläche oder eine Umfangsfläche mit mindestens einem Vorsprung oder einer Vertiefung aufweist, wobei der Anschlussbereich des zweiten Getriebes eine Vertiefung bzw. einen Vorsprung aufweist, die bzw. der sich an dem Vorsprung bzw. in der Vertiefung der Endkappe zur Drehmomentübertragung abstützt.

Weiterhin kann das erfindungsgemäße Förderrollensystem fortgebildet werden, indem das erste Getriebe einen ersten Anschlussbereich aufweist, der aus einem metallischen Werkstoff besteht und mit dem ersten Getriebeanschlussabschnitt zusammenwirkt, wobei das zweite Getriebe einen zweiten Anschlussbereich aufweist, der aus einem Polymermaterial besteht und mit dem zweiten Getriebeanschlussabschnitt zusammenwirkt.

Noch weiter kann das erfindungsgemäße Förderrollensystem fortgebildet werden, indem das erste Getriebe einen ersten Motoranschlussflansch aufweist und mittels des ersten Motoranschlussflansches mit einem in dem Förderrollenrohr angeordneten Motor koppelbar ist, wobei das zweite Getriebe einen mit dem ersten identischen zweiten Motoranschlussflansch aufweist und mittels des zweiten Motoranschlussflansches mit dem in dem Förderrollenrohr angeordneten Motor koppelbar ist.

Im Hinblick auf das solcherart fortgebildete Förderrollensystem wird Bezug genommen auf die vorstehenden Erläuterungen der erfindungsgemäßen Förderrolle mit den hierzu korrespondierenden Ausgestaltungen und Varianten sowie die in diesem Zusammenhang erläuterten Funktionen und Vorteile.

Die motorbetriebene Förderrolle zeichnet sich insbesondere durch eine hohe Variabilität im Hinblick auf den Einsatz unterschiedlicher Getriebe aus und ermöglicht es, dass die Förderrolle im späteren Gebrauch von einem Getriebe auf ein anderes Getriebe umgerüstet werden kann, ohne dass hierzu weitere Komponenten wie insbesondere die Endkappe ebenfalls ausgetauscht werden müssen.

Schließlich ist ein weiterer Aspekt der Erfindung ein Verfahren nach Anspruch 11 zur Herstellung einer motorbetriebenen Förderrolle, mit den Schritten: Bereitstellen eines Förderrollenrohres mit einem ersten und einem zweiten Ende, Befestigen einer ersten Endkappe am ersten Ende des Förderrollenrohres, Befestigen einer ersten Achslagerungseinheit in der ersten Endkappe und drehbares Lagern einer ersten Achseinheit an der ersten Achslagerungseinheit, Kraftschlüssiges Befestigen eines ersten Getriebes an einem ersten Getriebeanschlussabschnitt der ersten Endkappe, bei dem die erste Endkappe weiterhin einen zweiten Getriebeanschlussabschnitt aufweist und dass alternativ zum ersten Getriebe ein zweites Getriebe an dem zweiten Getriebeanschlussabschnitt befestigt wird.

Das erfindungsgemäße Verfahren zur Herstellung von Förderrollen weist den Vorteil auf, dass ohne die Notwendigkeit einer umfangreichen Lagerhaltung in kurzer Fertigungszeit und zu geringen Fertigungskosten motorbetriebene Förderrollen damit hergestellt werden können, die eine hohe Variabilität hinsichtlich der Auswahl des Getriebes haben.

Das Verfahren kann fortgebildet werden, indem ein elektrischer Motor in dem Förderrollenrohr angeordnet und mechanisch mit dem Förderrollenrohr gekoppelt wird zur Erzeugung eines Drehmoments zwischen dem Förderrollenrohr und der ersten Achseinheit. Weiterhin kann das Verfahren fortgebildet werden, durch eine zweite Achseinheit, die in einer zweiten Achslagerungseinheit in einer zweiten Endkappe am zweiten Ende des Förderrollenrohres angeordnet ist, wobei die zweite Endkappe vorzugsweise identisch mit der ersten Endkappe ist.

In Bezug auf das Herstellungsverfahren und dessen Fortbildungen wird ebenfalls Bezug genommen auf die vorstehenden, hierzu korrespondierenden Erläuterungen zur erfindungsgemäßen Förderrolle und die in diesem Zusammenhang beschriebenen Funktionen und Vorteile.

Bevorzugte Ausführungsformen der Erfindung werden anhand der beiliegenden Figuren beschrieben. Es zeigen:

Es zeigen
- Figur 1: eine längsgeschnittene Seitenansicht einer ersten Ausführungsform einer erfindungsgemäßen motorbetriebenen Förderrolle,
- Figur 2: einen vergrößerten Ausschnitt der Ansicht gemäß Figur 1,
- Figur 3: eine längsgeschnittene Seitenansicht einer zweiten Ausführungsform einer erfindungsgemäßen motorbetriebenen Förderrolle,
- Figur 4: einen vergrößerten Ausschnitt der Ansicht gemäß Figur 3,
- Figur 5: eine längsgeschnittene Seitenansicht in anderer Schnittebene der motorbetriebenen Förderrolle gemäß Figur 3,
- Figur 6: einen vergrößerten Ausschnitt der Ansicht gemäß Figur 5,
- Figur 7: eine perspektivische Ansicht einer Endkappe für eine erfindungsgemäße motorbetriebene Förderrolle, und
- Figur 8: eine längsgeschnittene Seitenansicht der Endkappe gemäß Figur7.

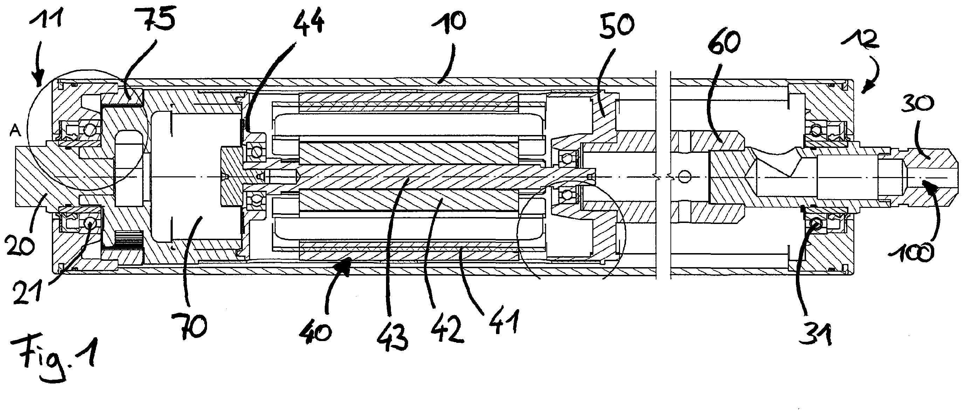

Aus Figur 1 ist der grundsätzliche Aufbau einer motorbetriebenen Förderrolle bzw. eines Trommelmotors zu erkennen. Ein Förderrollenrohr 10 erstreckt sich längs von einem ersten Ende 11 zu einem zweiten Ende 12. In dem Förderrollenrohr ist am ersten Ende eine erste Achseinheit 20 und am zweiten Ende eine zweite Achseinheit 30 angeordnet und mittels Kugellagern 21, 31 drehbar in Bezug auf den das Förderrollenrohr 10 gelagert. Hierdurch kann sich das Förderrollenrohr um die Achseinheiten 20, 30 drehen, die hierbei eine Rotationsachse 100 definieren.

Im Förderrollenrohr 10 ist weiterhin ein elektrischer Motor 40 angeordnet, der als Synchronmotor ausgeführt ist. Der Stator 41 des Elektromotors 40 ist mittels eines Zwischenflansches 50, eines Verlängerungsstücks 60 drehmomentfest mit der zweiten Achseinheit 30 gekoppelt und kann dadurch mittels der zweiten Achseinheit 30 ortsfest gehalten werden. Der Elektromotor 40 umfasst einen am Gehäuse angeordneten Stator 41 und einen in dem Stator angeordneten Rotor 42. Der Rotor ist auf einer Rotationswelle 43 angeordnet, die drehbar um die Achse 100 mittels eines Kugellagers in dem Zwischenflansch 50 auf der zum zweiten Ende weisenden Seite des Elektromotors gelagert ist. Auf der zum ersten Ende weisenden Seite des Elektromotors ist die Rotorwelle 43 in einem weiteren Kugellager drehbar gelagert, dass drehmomentfest in einer stirnseitigen Endscheibe des Elektromotors befestigt ist.

Die stirnseitige Endscheibe des Elektromotors ist mit einem Getriebe 70 drehmomentfest gekoppelt. Das Getriebe ist in dem abgebildeten Ausführungsbeispiel der Erfindung als hochbelastbares, metallisches Planetengetriebe mit 3 Stufen ausgeführt. Das Hohlrad der ersten, zum Elektromotor liegenden Stufe des Getriebes ist drehmomentfest mit dem stirnseitigen Enddeckel 44 des Getriebes verbunden. Die Rotorwelle 43 des Elektromotors treibt das Sonnenrad der ersten Stufe an. Der Planetenträger der ersten Stufe dient als Abtrieb der ersten Stufe und treibt das Sonnenrad der zweiten Stufe an. Der Planetenträger der zweiten Stufe dient als Abtrieb der zweiten Stufe und treibt das Sonnenrad der dritten Stufe an. Die Hohlräder der ersten beiden Stufen sind drehmomentfest miteinander verbunden und liegen ortsfest im Förderrollenrohr.

Der Planetenträger der dritten Stufe ist drehmomentfest mit der ersten Achseinheit verbunden und daher ortsfest. Das Hohlrad 75 der dritten Getriebestufe dient als Abtrieb des Planetengetriebes 70.

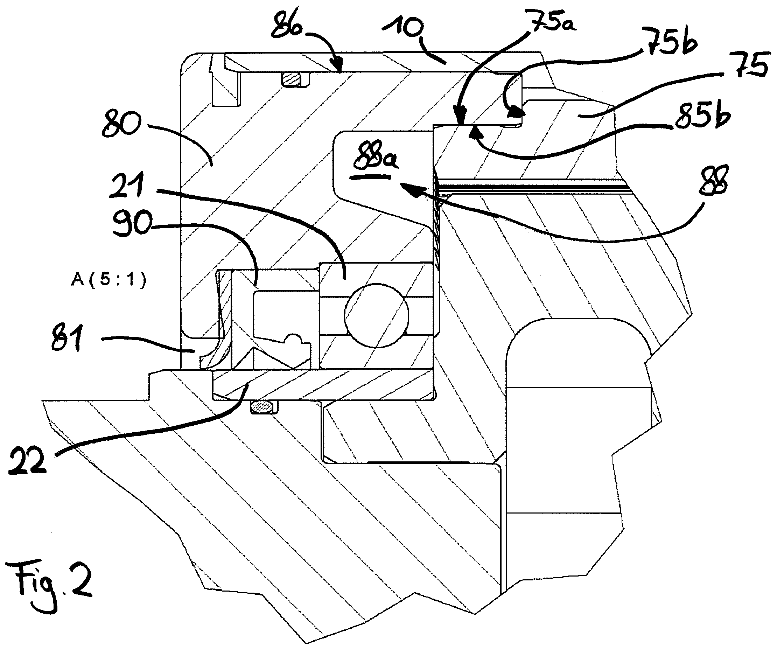

Figur 2 zeigt die Ankopplung des Abtriebs des Getriebes 70 in besser ersichtlichem Detail. Wie erkennbar, ist das Hohlrad 75 auf der zum ersten Ende weisenden Seite mit einem umlaufenden Absatz versehen. Dieser Absatz beinhaltet eine Außenumfangsfläche 75a und eine axiale Stirnfläche 75b. Die Außenumfangsfläche 75a ist eine mit enger Toleranz ausgeführte Fläche, die in Presspassung zu einer Innenumfangsfläche 85a einer Endkappe 80 steht. Das Drehmoment, welches am Getriebeausgang erzeugt wird, kann daher durch die kraftschlüssige Verbindung zwischen den Flächen 75a und 85a von dem Getriebeausgang 75 auf die Endkappe 80 übertragen werden.

Die Endkappe 80 weist eine Durchgangsbohrung 81 auf, in der in zwei entsprechenden umlaufenden Absätzen ein Radialwellendichtring 90 und das Kugellager 21 befestigt sind. Der Radialwellendichtring dichtet gegen die Achseinheit 20 ab, indem ein Laufring 22 auf diese Achseinheit angeordnet ist und die Dichtungslippe auf der Außenumfangsfläche dieses Laufrings abdichtet. Das Kugellager 21 liegt mit seinem Innenring ebenfalls auf dem Laufring 22 auf. Der Außenring des Kugellagers ist in der Endkappe 80 gehalten.

Die Endkappe 80 ist weiterhin über eine Außenumfangsfläche 86 drehmomentfest in das Förderrollenrohr 10 eingepresst. An dieser Außenumfangsfläche 86 ist ebenfalls eine Presspassung verwirklicht und das Drehmoment wird über diese Presspassung auf das Förderrollenrohr übertragen.

Die Endkappe 80 weist weiterhin eine sich axial erstreckende Ringnut auf der zum zweiten Ende weisenden Seite der Endkappe auf. Dieser Ringnut ist durch mehrere sich radial erstreckende Rippen88a,b,c,... unterteilt. Die Ringnut 88 mit den Rippen 88a, b, c, ... bildet einen zur Drehmomentübertragung geeigneten Abschnitt aus. Bei der in den Figuren 1 und 2 gezeigten Ausführungsform wird dieser Abschnitt nicht zur Drehmomentübertragung benötigt.

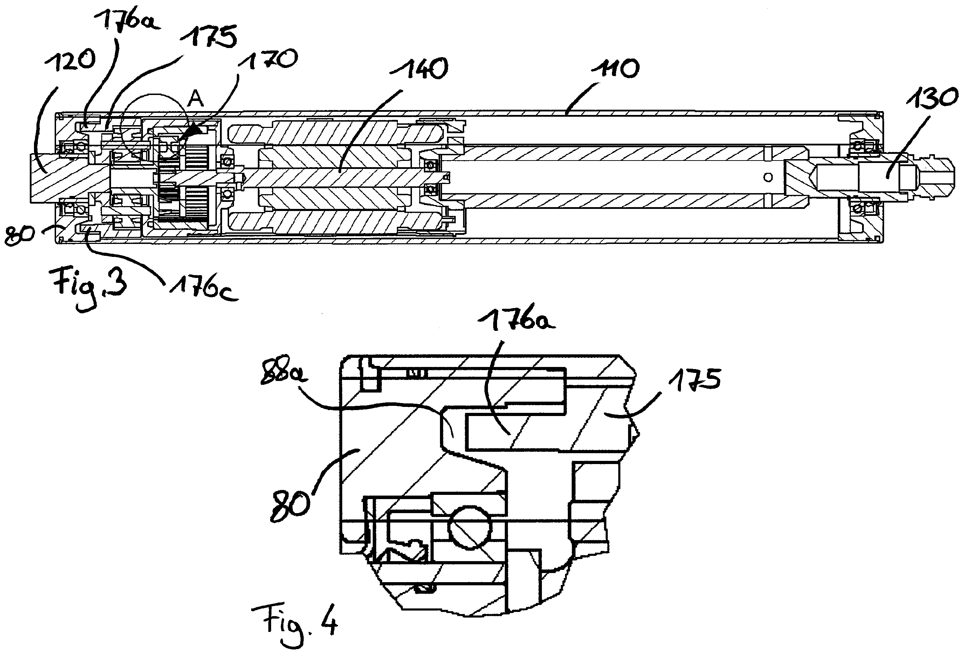

In den Figuren 3-6 ist eine zweite Ausführungsform der Erfindung dargestellt. Der grundsätzliche Aufbau der motorbetriebenen Förderrolle gemäß dieser zweiten Ausführungsform ist übereinstimmend mit dem Aufbau der motobetriebenen Förderrolle gemäß Figuren 1 und 2. Ebenso wie diese umfasst die in den Figuren 3-6 dargestellte motobetriebene Förderrolle einen elektrischen Motor 140, der in einem Förderrollenrohr 110 angeordnet ist , dass drehbar um eine erste Achseinheit 120 und eine zweite Achseinheit 130 gelagert ist.

Die in den Figuren 3-6 gezeigte Ausführungsform ist ebenfalls mit einem Getriebe 170 ausgerüstet. Dieses Getriebe ist wiederum als dreistufiges Planetenradgetriebe ausgeführt, die Zahnräder dieses Planetenradgetriebes bestehen jedoch im Gegensatz zu demjenigen der ersten Ausführungsform nicht aus einem metallischen Werkstoff, sondern aus einem polymer Material, spezifisch kommen bei diesem Getriebe Zahnräder aus Polyoxymethylen (POM, auch Polyacetal) zum Einsatz. Wie bei der ersten Ausführungsform dient das Hohlrad 175 der dritten Getriebestufe als Getriebeabtrieb. Das Hohlrad 175 ist zu diesem Zweck drehmomentfest mit der Endkappe 80 verbunden. Die Endkappe 80 ist insgesamt baugleich zur der Endkappe 80 der ersten Ausführungsform ausgeführt. Demnach kann die Endkappe 80 sowohl für die erste wie auch für die zweite Ausführungsform der motobetriebenen Förderrolle eingesetzt werden.

Bei der in den Figuren 3-6 abgebildeten zweiten Ausführungsform ist keine Presspassung zwischen dem Getriebeabtrieb und der Innenumfangsfläche 85a der Endkappe 80 ausgebildet. Das Hohlrad 175 weist stattdessen sich axial erstreckende Finger 176 a,b,c auf, die zwischen den Rippen 88 a,b,c der Endkappe 80 eingreifen. Diese Finger 176 a,b,c stellen somit einen Formschluss zu den Rippen 88 der Endkappe dar und das Drehmoment am Getriebeausgang wird über diesen Formschluss zwischen den Fingern 176 a,b,c und den Rippen 88 der Endkappe übertragen. Der durch die Innenumfangsfläche 85 a gebildeten Getriebeanschlussabschnitts ist bei der zweiten Ausführungsform ungenutzt. Durch diese Ausgestaltung wird eine für das verwendete Zahnradmaterial POM ideale drehmomentfeste Verbindung zwischen der Endkappe 80 und dem Getriebe 170 erzielt.

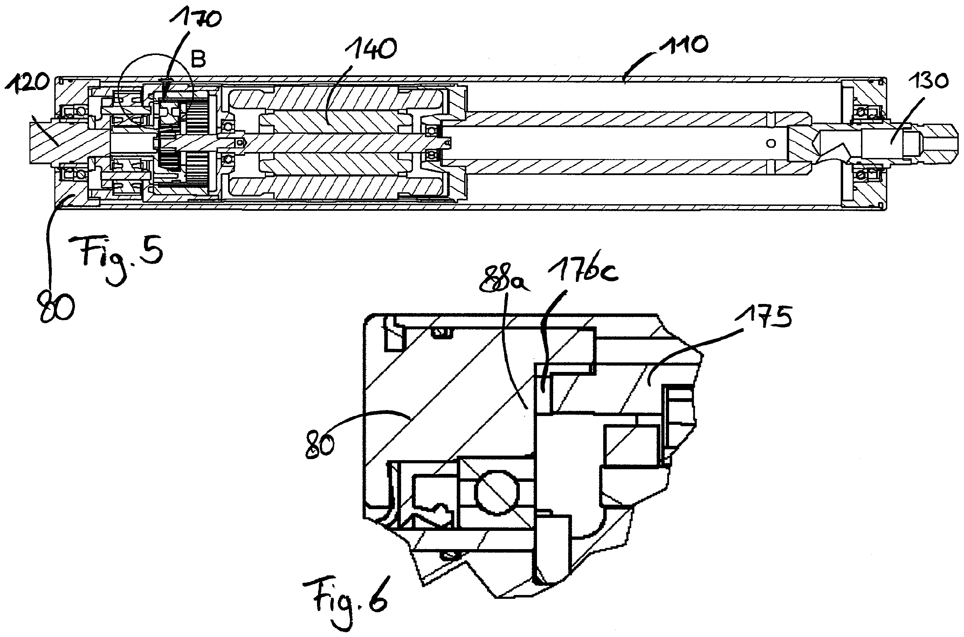

In Figur 4 ist in größerem Detail ein Schnitt durch einen Finger 176a gelegt, der in die Ringnut 88 zwischen zwei Rippen 88a,b eingreift. In Figur 6 ist ein demgegenüber in einer anderen Schnittebene liegender Schnitt in größerem Detail gezeigt. In diesem Schnitt ist die Schnittführung durch eine Rippe 88a gelegt. Wie ersichtlich, erstreckt sich in diesem Bereich kein Finger des Hohlrads 175, sondern es ist eine Vertiefung zwischen den Fingern in diesem Winkelbereich angeordnet.

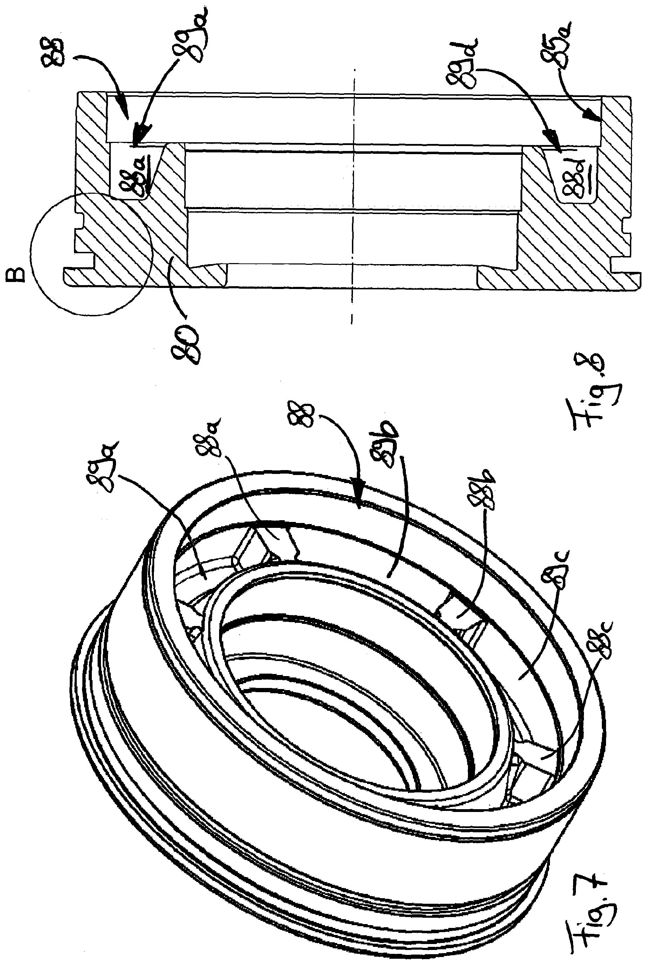

Figur 7 zeigt eine perspektivische Ansicht der Endkappe, die bei den motorbetriebenen Förderrollen gemäß den Figuren 1-6 am ersten Ende in das Förderrollenrohr eingesetzt ist. Man erkennt die sich radial erstreckenden Rippen 88 a, b, c, zwischen denen jeweils Vertiefungen ausgebildet sind, in welche die Finger 176 a,b,c des Hohlrads 175 eingreifen können.

Die Wandstärke der Rippen 88 verläuft von innen nach außen leicht konisch, sodass innenliegend eine geringere Wandstärke vorliegt als außenliegend. Hierdurch können die dazu kongruent ausgebildeten Finger 176 a,b,c in die Zwischenräume 89 a, b, c eingreifen und an den Rippen 88 a, b, c zentriert werden. Die Ausführungsform gemäß Figur 2 kann hierdurch auch eine zuverlässige Zentrierung des Hohlrads an der Endkappe mit gleichzeitigem Drehmoment fester formschlüssiger Kraftübertragung bewirken.

Figur 8 zeigt einen Längsschnitt durch die aus Gestaltung der Endkappe gemäß Figur 7, die in den motobetriebenen Förderrollen der Figuren 1-6 zum Einsatz kommt. Der Schnitt Figur 8 ist durch den Zwischenraum 89 a,d zwischen zwei Rippen 88 a, b und d, e geführt, sodass man jeweils auf Rippen 88 a, d blickt in Figur 8. Weiterhin erkennbar ist die Innenumfangsfläche 85a, die zur Ausbildung der Presspassung zu der Außenumfangsfläche 75a des metallischen Getriebes der ersten Ausführungsform dient.

## Patentansprüche

1. Förderrollensystem mit einer motorbetriebenen Förderrolle,
wobei die Förderrolle umfasst:
- ein Förderrollenrohr (10),
- eine erste Achseinheit (20), die in ein erstes Ende (11) des Förderrollenrohres eingesetzt ist,
- eine erste Lagerungseinheit am ersten Ende, um die das Förderrollenrohr um die erste Achseinheit entsprechend drehbar gelagert ist,
- eine Antriebseinheit, und
- ein in dem Förderrollenrohr angeordnetes erstes Getriebe (70), das ein von der Antriebseinheit erzeugtes Drehmoment zwischen dem Förderrollenrohr und der ersten Achseinheit überträgt,
**gekennzeichnet durch** eine Endkappe (80), welche drehmomentfest an dem ersten Ende mit dem Förderrollenrohr (10) verbunden ist und mit der das erste Getriebe (70) drehmomentfest an einem ersten Getriebeanschlussabschnitt der Endkappe (80) verbunden ist, wobei die Endkappe (80) einen zweiten Getriebeanschlussabschnitt aufweist, der von dem ersten Getriebeanschlussabschnitt verschieden ist ,
wobei das Förderrollensystem ein zweites Getriebe (170) umfasst, das einen Anschlussbereich aufweist, der mit dem zweiten Getriebeanschlussabschnitt eine drehmomentfeste Verbindung, insbesondere eine mittels Formschluss drehmomentübertragende Verbindung ausbildet,
wobei vorzugsweise der zweite Getriebeanschlussabschnitt eine axiale Fläche oder eine Umfangsfläche mit mindestens einem Vorsprung oder einer Vertiefung und der Anschlussbereich des zweiten Getriebes eine Vertiefung bzw. einen Vorsprung aufweist, die bzw. der sich an dem Vorsprung bzw. in der Vertiefung der Endkappe zur Drehmomentübertragung abstützt.

2. Förderrollensystem nach dem vorhergehenden Anspruch,
**dadurch gekennzeichnet, dass** das erste Getriebe (70) einen ersten Anschlussbereich aufweist, der aus einem metallischen Werkstoff besteht und mit dem ersten Getriebeanschlussabschnitt zusammenwirkt und dass das zweite Getriebe (170) einen zweiten Anschlussbereich aufweist, der aus einem Polymermaterial besteht und mit dem zweiten Getriebeanschlussabschnitt zusammenwirkt.

3. Förderrollensystem nach einem der vorhergehenden Ansprüche,
**dadurch gekennzeichnet, dass** das erste Getriebe (70) einen ersten Motoranschlussflansch aufweist und mittels des ersten Motoranschlussflansches mit einem in dem Förderrollenrohr angeordneten Motor koppelbar ist und dass das zweite Getriebe (170) einen mit dem ersten kompatiblen zweiten Motoranschlussflansch aufweist und mittels des zweiten Motoranschlussflansches mit dem in dem Förderrollenrohr angeordneten Motor koppelbar ist.

4. Förderrollensystem nach einem der vorhergehenden Ansprüche,
**dadurch gekennzeichnet, dass** der erste Getriebeanschlussabschnitt eine kraftschlüssige, drehmomentfeste Verbindung zu dem ersten Getriebe (70) bereitstellt.

5. Förderrollensystem nach einem der vorhergehenden Ansprüche,
**dadurch gekennzeichnet, dass** der zweite Getriebeanschlussabschnitt eine nicht kraftschlüssige, drehmomentfeste Verbindung zu einem zweiten Getriebe bereitstellt, das von dem ersten Getriebe verschieden ist und an Stelle des ersten Getriebes in dem Förderrollenrohr montierbar ist
wobei vorzugsweise der zweite Getriebeanschlussabschnitt eine formschlüssige, drehmomentfeste Verbindung zu dem zweiten Getriebe bereitstellt.

6. Förderrollensystem nach einem der vorhergehenden Ansprüche,
**dadurch gekennzeichnet, dass** bei Verbindung des ersten Getriebes mit dem ersten Getriebeanschlussabschnitt der zweite Getriebeanschlussabschnitt nicht zur Drehmomentübertragung mit dem ersten Getriebe zusammenwirkt.

7. Förderrollensystem nach einem der vorhergehenden Ansprüche,
**dadurch gekennzeichnet, dass**
- der erste Getriebeanschlussabschnitt durch eine zylindrische Umfangsfläche gebildet wird, die mit einer zylindrischen Umfangsfläche des ersten Getriebes eine Presspassung bildet und/oder
- der zweite Getriebeanschlussabschnitt eine axiale Fläche oder eine Umfangsfläche mit mindestens einem Vorsprung oder einer Vertiefung aufweist.

8. Förderrollensystem nach einem der vorhergehenden Ansprüche,
**gekennzeichnet durch** eine zweite Achseinheit (30), die in ein dem ersten Ende gegenüberliegendes zweites Ende (12) des Förderrollenrohres eingesetzt ist, und eine zweite Lagerungseinheit am zweiten Ende des Förderrollenrohres, die in einer zweiten Endkappe befestigt ist, die identisch mit der ersten Endkappe ausgeführt und spiegelsymmetrisch in Bezug auf eine mittige Querschnittsfläche des Förderrollenrohres zur ersten Endkappe im Förderrollenrohr befestigt ist.

9. Förderrollensystem nach einem der vorhergehenden Ansprüche,
**gekennzeichnet durch** ein erstes Dichtungselement (90), dass eine Abdichtung zwischen der ersten Achseinheit und der ersten Endkappe bewirkt und das in der ersten Endkappe befestigt ist.

10. Förderrollensystem nach einem der vorhergehenden Ansprüche,
**dadurch gekennzeichnet, dass** das erste Getriebe einen Motoranschlussflansch aufweist und mittels des Motoranschlussflansches mit einem in dem Förderrollenrohr angeordneten Motor gekoppelt ist.

11. Verfahren zur Herstellung einer motorbetriebenen Förderrolle, mit den Schritten:
- Bereitstellen eines Förderrollenrohres (10) mit einem ersten und einem zweiten Ende,
- Befestigen einer ersten Endkappe (80) am ersten Ende (11) des Förderrollenrohres (10),
- Befestigen einer ersten Achslagerungseinheit in der ersten Endkappe (80) und drehbares Lagern einer ersten Achseinheit (20) an der ersten Achslagerungseinheit,
- Kraftschlüssiges Befestigen eines ersten Getriebes (70) an einem ersten Getriebeanschlussabschnitt der ersten Endkappe (80), **dadurch gekennzeichnet, dass** die erste Endkappe (80) weiterhin einen zweiten Getriebeanschlussabschnitt aufweist und dass alternativ zum ersten Getriebe (70) ein zweites Getriebe (170) an dem zweiten Getriebeanschlussabschnitt befestigt wird.

12. Verfahren nach Anspruch 11,
**dadurch gekennzeichnet, dass** ein elektrischer Motor (40) in dem Förderrollenrohr angeordnet und mechanisch mit dem Förderrollenrohr gekoppelt wird zur Erzeugung eines Drehmoments zwischen dem Förderrollenrohr und der ersten Achseinheit.

13. Verfahren nach Anspruch 11 oder 12,
**gekennzeichnet durch** eine zweite Achseinheit (30), die in einer zweiten Achslagerungseinheit in einer zweiten Endkappe am zweiten Ende (12) des Förderrollenrohres angeordnet ist, wobei die zweite Endkappe vorzugsweise identisch mit der ersten Endkappe ist.

## Claims

1. A conveyor roller system having a motor-driven conveyor roller,
wherein the conveyor roll comprising:
- a conveyor roller tube (10),
- a first axle unit (20), which is inserted into a first end (11) of the conveyor roller tube,
- a first bearing unit at the first end, around which the conveyor roller tube is mounted so as to be correspondingly rotatable around the first axle unit,
- a drive unit, and
- a first gearing (70), which is arranged in the conveyor roller tube and which transmits a torque, generated by the drive unit, between the conveyor roller tube and the first axle unit;
**characterized by**
an end cap (80) which is connected fixedly in terms of torque to the conveyor roller tube (10) at the first end and to which the first gearing (70) is connected fixedly in terms of torque at a first gearing connection section of the end cap (80), wherein the end cap (80) has a second gearing connection section, which is different from the first gearing connection section,
wherein the conveyor roller system comprises a second gearing (170), which has a connection region which forms, with the second gearing connection section, a connection fixed in terms of torque, in particular a connection which transmits torque by means of a form fit,
wherein preferably the second gearing connection section has an axial surface or a peripheral surface having at least one projection or one depression, and that the connection region of the second gearing has a depression or a projection which is supported against the projection or in the depression of the end cap for torque transmission.

2. The conveyor roller system according to the preceding claim,
**characterized in**
**that** the first gearing (70) has a first connection region, which consists of a metallic material and interacts with the first gearing connection section, and in that the second gearing (170) has a second connection region, which consists of a polymer material and interacts with the second gearing connection section.

3. The conveyor roller system according to any of the preceding claims,
**characterized in**
**that** the first gearing (70) has a first motor connection flange and is able to be coupled by means of the first motor connection flange to a motor arranged in the conveyor roller tube, and in that the second gearing (170) has a second motor connection flange, which is compatible with the first connection flange, and is able to be coupled by means of the second motor connection flange to the motor arranged in the conveyor roller tube.

4. The conveyor roller system according to any of the preceding claims,
**characterized in**
**that** the first gearing connection section provides a force-fitting connection fixed in terms of torque to the first gearing (70).

5. The conveyor roller system according to any of the preceding claims,
**characterized in**
**that** the second gearing connection section provides a non- force- fitting connection fixed in terms of torque to a second gearing, which is different from the first gearing and is able to be mounted instead of the first gearing in the convey- or roller tube,
wherein preferably the second gearing connection section provides a form-fitting connection fixed in terms of torque to the second gearing.

6. The conveyor roller system according to any of the preceding claims,
**characterized in**
**that**, with the connection of the first gearing to the first gearing connection section, the second gearing connection section does not interact with the first gearing for torque transmission.

7. The conveyor roller system according to any of the preceding claims,
**characterized in that**
- the first gearing connection section is formed by a cylindrical peripheral surface which forms a press fit with a cylindrical peripheral surface of the first gearing and/or
- the second gearing connection section has an axial surface or a peripheral surface having at least one projection or one depression.

8. The conveyor roller system according to any of the preceding claims,
**characterized by**
a second axle unit (30), which is inserted into a second end (12), opposite the first end, of the conveyor roller tube, and by a second bearing unit at the second end of the conveyor roller tube, which is fastened in a second end cap, this being of identical design to the first end cap and fastened in the conveyor roller tube mirror symmetrically with respect to the first end cap relative to a central cross-sectional area of the conveyor roller tube.

9. The conveyor roller system according to any of the preceding claims,
**characterized by**
a first seal element (90), which brings about sealing between the first axle unit and the first end cap and which is fastened in the first end cap.

10. The conveyor roller system according to any of the preceding claims,
**characterized in**
**that** the first gearing has a motor connection flange and is coupled by means of the motor connection flange to a motor arranged in the conveyor roller tube.

11. A method for producing a motor-driven conveyor roller, comprising the steps of:
- providing a conveyor roller tube (10) having a first and a second end,
- fastening a first end cap (80) to the first end (11) of the conveyor roller tube (10),
- fastening a first axle bearing unit in the first end cap (80) and rotatably mounting a first axle unit (20) to the first axle bearing unit,
- fastening a first gearing (70) to a first gearing connection section of the first end cap (80) in a force-fitting manner,
**characterized in**
**that** the first end cap (80) also has a second gearing connection section, and in that, as an alternative to the first gearing (70), a second gearing (170) is fastened to the second gearing connection section.

12. The method according to claim 11,
**characterized in**
**that** an electric motor (40) is arranged in the conveyor roller tube and mechanically coupled to the conveyor roller tube for the purpose of generating a torque between the conveyor roller tube and the first axle unit.

13. The method according to claim 11 or 12,
**characterized by**
a second axle unit (30), which is arranged in a second axle bearing unit in a second end cap at the second end (12) of the conveyor roller tube, wherein the second end cap is preferably identical to the first end cap.

## Revendications

1. Système de rouleau de transport comportant un rouleau de transport entraîné par moteur,
le rouleau de transport comprenant :
- un tube de rouleau de transport (10),
- une première unité d'essieu (20) qui est insérée dans une première extrémité (11) du tube de rouleau de transport,
- une première unité de support à la première extrémité, unité de support autour de laquelle le tube de rouleau de transport est monté à rotation de manière correspondante autour de la première unité d'essieu,
- une unité d'entraînement, et
- une première transmission (70) disposée dans le tube de rouleau de transport, laquelle transmet un couple généré par l'unité d'entraînement entre le tube de rouleau de transport et la première unité d'essieu,
**caractérisé par** un couvercle d'extrémité (80), lequel est relié au tube de rouleau de transport (10) à la première extrémité de manière à résister au couple et auquel la première transmission (70) est reliée de manière à résister au couple au niveau d'une première partie de raccordement de transmission du couvercle d'extrémité (80), le couvercle d'extrémité (80) présentant une deuxième partie de raccordement de transmission qui est différente de la première partie de raccordement de transmission,
le système de rouleau de transport comprenant une deuxième transmission (170) qui présente une région de raccordement qui forme avec la deuxième partie de raccordement de transmission une liaison résistante au couple, en particulier une liaison de transmission de couple par complémentarité de formes,
la deuxième partie de raccordement de transmission présentant de préférence une surface axiale ou une surface périphérique dotée d'au moins une saillie ou d'un évidement et la région de raccordement de la deuxième transmission présentant un évidement ou une saillie, lequel ou laquelle est supporté(e) sur la saillie ou dans l'évidement du couvercle d'extrémité pour la transmission de couple.

2. Système de rouleau de transport selon la revendication précédente,
**caractérisé en ce que** la première transmission (70) présente une première région de raccordement qui est constituée d'une matière métallique et coopère avec la première partie de raccordement de transmission et **en ce que** la deuxième transmission (170) présente une deuxième région de raccordement qui est constituée d'une matière polymère et coopère avec la deuxième partie de raccordement de transmission.

3. Système de rouleau de transport selon l'une des revendications précédentes,
**caractérisé en ce que** la première transmission (70) présente une première bride de raccordement de moteur et peut être accouplée, au moyen de la première bride de raccordement de moteur, à un moteur disposé dans le tube de rouleau de transport et **en ce que** la deuxième transmission (170) présente une deuxième bride de raccordement de moteur compatible avec la première et peut être accouplée, au moyen de la deuxième bride de raccordement de moteur, au moteur disposé dans le tube de rouleau de transport.

4. Système de rouleau de transport selon l'une des revendications précédentes,
**caractérisé en ce que** la première partie de raccordement de transmission produit une liaison à force, résistante au couple, par rapport à la première transmission (70).

5. Système de rouleau de transport selon l'une des revendications précédentes,
**caractérisé en ce que** la deuxième partie de raccordement de transmission produit une liaison résistante au couple, mais pas à force, par rapport à une deuxième transmission qui est différente de la première transmission et peut être montée à l'emplacement de la première transmission dans le tube de rouleau de transport,
la deuxième partie de raccordement de transmission produisant de préférence une liaison résistante au couple et à complémentarité de formes par rapport à la deuxième transmission.

6. Système de rouleau de transport selon l'une des revendications précédentes,
**caractérisé en ce que** lors de la liaison de la première transmission à la première partie de raccordement de transmission, la deuxième partie de raccordement de transmission ne coopère pas avec la première transmission pour la transmission de couple.

7. Système de rouleau de transport selon l'une des revendications précédentes,
**caractérisé en ce que**
- la première partie de raccordement de transmission est formée par une surface périphérique cylindrique qui forme un ajustement serré avec une surface périphérique cylindrique de la première transmission et/ou
- la deuxième partie de raccordement de transmission présente une surface axiale ou une surface périphérique dotée d'au moins une saillie ou d'un évidement.

8. Système de rouleau de transport selon l'une des revendications précédentes,
**caractérisé par** une deuxième unité d'essieu (30) qui est insérée dans une deuxième extrémité (12), opposée à la première extrémité, du tube de rouleau de transport, et une deuxième unité de support à la deuxième extrémité du tube de rouleau de transport, laquelle deuxième unité de support est fixée dans un deuxième couvercle d'extrémité qui est réalisé de manière identique au premier couvercle d'extrémité et présente une symétrie miroir par rapport au premier couvercle d'extrémité dans le tube de rouleau de transport en référence à une surface de section transversale centrale du tube de rouleau de transport.

9. Système de rouleau de transport selon l'une des revendications précédentes,
**caractérisé par** un premier élément d'étanchéité (90) qui produit une étanchéité entre la première unité d'essieu et le premier couvercle d'extrémité et qui est fixé dans le premier couvercle d'extrémité.

10. Système de rouleau de transport selon l'une des revendications précédentes,
**caractérisé en ce que** la première transmission présente une bride de raccordement de moteur et est accouplée, au moyen de la bride de raccordement de moteur, à un moteur disposé dans le tube de rouleau de transport.

11. Procédé de fabrication d'un tube de transport entraîné par moteur, comportant les étapes suivantes :
- fourniture d'un tube de rouleau de transport (10) doté d'une première et d'une deuxième extrémité,
- fixation d'un premier couvercle d'extrémité (80) à la première extrémité (11) du tube de rouleau de transport (10),
- fixation d'une première unité de support d'essieu dans le premier couvercle d'extrémité (80) et montage à rotation d'une première unité d'essieu (20) sur la première unité de support d'essieu,
- fixation à force d'une première transmission (70) à une première partie de raccordement de transmission du premier couvercle d'extrémité (80),
**caractérisé en ce que** le premier couvercle d'extrémité (80) présente en outre une deuxième partie de raccordement de transmission et **en ce qu'**en variante de la première transmission (70), une deuxième transmission (170) est fixée à la deuxième partie de raccordement de transmission.

12. Procédé selon la revendication 11,
**caractérisé en ce qu'**un moteur électrique (40) est disposé dans le tube de rouleau de transport et est accouplé mécaniquement au tube de rouleau de transport pour générer un couple entre le tube de rouleau de transport et la première unité d'essieu.

13. Procédé selon la revendication 11 ou 12,
**caractérisé par** une deuxième unité d'essieu (30) qui est disposée dans une deuxième unité de support d'essieu dans un deuxième couvercle d'extrémité à la deuxième extrémité (12) du tube de rouleau de transport, le deuxième couvercle d'extrémité étant de préférence identique au premier couvercle d'extrémité.
